# FASCICULE DE BREVET EUROPEEN

(11) **EP 1 456 006 B1**
(45) Date de publication et mention de la délivrance du brevet: **18.07.2007**
(21) Numéro de dépôt: 02804933.6
(22) Date de dépôt: 17.12.2002
(51) Int. Cl.: B29D 11/00

(54) **MOULE ET PROCEDE DE MATRICAGE A CHAUD D UNE LENTILLE OPTIQUE EN MATIERE THERMOPLASTIQUE**
GIESSFORM UND VERFAHREN ZUR HERSTELLUNG EINER LINSE AUS THERMOPLASTISCHEM KUNSTSTOFF
MOULD AND METHOD FOR THE HOT FORMING OF A THERMOPLASTIC OPTICAL LENS

(30) Priorité: 17.12.2001 US 15587
(43) Date de publication de la demande: 15.09.2004
(73) Titulaire: ESSILOR INTERNATIONAL (Compagnie Générale d'Optique), F-94220 Charenton-le-Pont (FR)
(72) Inventeur: Chiu, Hao-Wen, Palm Harbor, FL 34685 (US); YANG, Hsinjin, PALM HARBOR, FL 34685 (US); Lockwood, Matthew, Bradenton, FL 34208 (US)
(74) Mandataire: Lepelletier-Beaufond, François
(86) Numéro de dépôt international: PCT/FR2002/004386
(87) Numéro de publication internationale: WO 2003/051616

(56) Documents cités:
- WO-A-01/43953
- WO-A-99/24243
- GB-A- 572 748
- US-A- 2 304 664
- US-A- 4 364 878
- US-A- 4 569 807
- US-A- 4 933 119
- US-A- 5 075 051
- PATENT ABSTRACTS OF JAPAN vol. 011, no. 302 (M-629), 2 octobre 1987 (1987-10-02) -& JP 62 095210 A (HITACHI LTD), 1 mai 1987 (1987-05-01)

## Description

La présente invention se rapporte à la fabrication de lentilles optiques en matière plastique, telles que des lentilles ophtalmiques ou des lentilles d'instruments, obtenues par un moulage plastique (appelé matriçage) approprié d'une matière plastique, notamment d'une résine thermoplastique, telle que du polyméthacrylate de méthyle, du polycarbonate ou copolymère de polycarbonate, du polynorbornène, du polystyrène, d'une polyolefine cyclique ou un de ses copolymères, etc.

On sait que, dans la fabrication de lentilles optiques par un procédé de ce genre, on met à profit la faculté que possède la matière plastique de se déformer à la chaleur pour conférer auxdites lentilles la forme requise. A partir d'une masse de matière thermoplastique de forme standard (couramment appelée paraison) ou d'une préforme spécifique de forme proche de celle souhaitée, cette mise en forme s'opère par matriçage sous pression entre deux matrices appliquées par une presse sur la matière préalablement chauffée à l'état plastique. Les matrices, qui sont généralement en acier inoxydable, présentent chacune une face de matriçage possédant la ou les courbures appropriées, correspondant à celles que l'on entend donner à la lentille finie, et présentent un poli optique, c'est-à-dire analogue à celui d'un miroir.

Pour obtenir des lentilles possédant les qualités optiques répondant à leur destination, certaines précautions doivent être prises au cours de la fabrication, spécialement pour éviter les déformations irrégulières ou la présence de tensions internes, ces déformations ou tensions créant une anisotropie ou des aberrations indésirables.

A cet égard, on prend des soins particuliers pour la réalisation des matrices de moulage. En outre, il est souvent préconisé de procéder à la fabrication en deux phases successives : d'abord la confection, par moulage-injection, matriçage ou usinage, d'une ébauche aux dimensions voisines de celles de la lentille à réaliser, puis la finition par matriçage à chaud de cette ébauche.

A ces précautions visant l'outillage et le mode opératoire, il convient d'ajouter celles visant le chauffage de la matière plastique et du moule pendant le matriçage. Ordinairement, le chauffage est assuré par les matrices elles-mêmes, lesquelles sont aménagées pour recevoir un fluide ou gaz chauffant, ou des résistances électriques. La chaleur fournie par la circulation du fluide chaud ou des résistances électriques se répand dans la masse des matrices et se communique par les parois de celles-ci à la matière plastique en cours de sa mise en forme.

Ce mode de chauffage présente en pratique des inconvénients.

Tout d'abord, il n'assure pas le chauffage de la matière plastique de la façon régulière et uniforme qui serait souhaitable pour éviter les tensions internes. Les différentes parties des matrices et, partant, de la matière à façonner ne parviennent que progressivement et inégalement à la température requise pour le matriçage. Ce manque d'uniformité de transmission de la chaleur se retrouve également au refroidissement après matriçage.

Il résulte de cette inégalité de chauffage et de refroidissement en différents points de la matière façonnée, que la lentille optique obtenue conserve des déformations et tensions qui souvent la rendent impropre aux utilisations optiques auxquelles elle est destinée.

D'autre part, selon les dispositions usuelles, les matrices prévues pour recevoir les dispositifs de chauffage et de refroidissement, sont fixées sur la presse, et c'est en considération de cet agencement que sont ménagés les raccords avec les alimentations en fluide chauffant ou en courant électrique. Avec des installations de ce genre, les opérations de montage et de démontage des matrices sont longues et compliquées.

Un autre mode de chauffage, visant à pallier ces inconvénients, consiste à utiliser des moyens de chauffage externes, dissociés du moule lui-même, et en particulier des matrices. Le moule, contenant la préforme ou paraison, est ainsi chauffé séparément de la presse, avant son installation sur celle-ci pour l'opération de matriçage. Toutefois, le fait que le moule soit chauffé séparément de la presse par des moyens externes permet certes d'affranchir les matrices de tout raccordement hydraulique ou électrique, mais présente l'inconvénient majeur de nécessiter une manipulation du moule à chaque cycle, ce qui ralenti considérablement les cadences de production. De plus, la température du moule ne peut être contrôlée au cours du matriçage et le refroidissement du moule après matriçage n'est pas prévu et ne peut, comme le chauffage, être envisagé qu'avec des moyens externes nécessitant une manipulation supplémentaire.

Pour permettre le transport du moule du poste de chauffage au poste de matriçage (i.e. la presse), le moule comporte un fourreau enveloppant les matrices et dans lequel ces dernières sont montées coulissantes. Le fourreau a alors pour fonction d'assurer l'unité mécanique du moule en procurant une liaison mécanique entre les deux matrices indépendamment de la presse. Un dispositif selon les préambules de la revendication 1 est connu de GB-A-572748.

Selon l'invention, on propose un moule de matriçage à chaud d'une lentille optique en matière thermoplastique, comportant deux matrices montées dans un fourreau pour coulisser suivant l'axe de ce fourreau et présentant chacune une face de matriçage en regard de l'autre, moule dans lequel les deux matrices et le fourreau sont pourvus de moyens intrinsèques et ambivalents de transfert thermique (chauffage et refroidissement) selon revendication 1. Par exemple, les moyens de transfert thermique comportent un circuit interne de circulation d'un fluide caloporteur.

On combine ainsi deux avantages. Tout d'abord, l'enveloppement des matrices dans un fourreau auto-modulé thermiquement permet d'améliorer la qualité et notamment l'homogénéité du chauffage ou du refroidissement du moule et, partant, de la matière thermoplastique. Le fourreau exerce ainsi une fonction de ceinturage thermique qui s'ajoute éventuellement à sa fonction de guide mécanique des deux matrices l'une par rapport à l'autre. De plus, l'intégration de moyens de transfert thermique ambivalents dans les parties principales du moule, à savoir les matrices et le fourreau, permet d'assurer aussi bien le chauffage que le refroidissement du moule suivant une loi de régulation thermique optimisée, sans qu'il soit nécessaire de déplacer le moule pour le soumettre à l'action de moyens de chauffage et/ou de refroidissement externes.

Selon une caractéristique avantageuse de l'invention, chaque matrice se compose :
- d'une embase comportant au moins une partie des moyens de transfert thermique de ladite matrice et des moyens de leur raccordement à une source de régulation thermique,
- d'un insert amovible rapporté sur l'embase et portant la face de matriçage.

L'insert est ainsi interchangeable et peut de ce fait être choisi parmi un jeu préétabli ou même fabriqué à la demande en fonction de la définition de surface souhaitée pour la lentille. Le montage/démontage de l'insert sur le moule est aisé et rapide, dans la mesure où le raccordement à la source de régulation thermique s'opère via l'embase et ne doit donc pas être démonté.

Avantageusement alors, l'embase de chaque matrice reçoit la totalité des moyens de transfert thermique de ladite matrice, l'insert, dépourvu de tels moyens, étant exclusivement régulé thermiquement par transfert thermique avec l'embase. Le montage de l'insert sur l'embase est donc exempt de tout raccordement hydraulique ou électrique, tant avec la source de régulation thermique qu'avec l'embase.

On propose également selon l'invention un procédé de matriçage à chaud d'une lentille optique en matière thermoplastique au moyen du moule défini ci-dessus, comportant les étapes de :
- disposer une paraison ou préforme de ladite matière thermoplastique entre les deux matrices et enfermer l'ensemble dans le fourreau ;
- chauffer les matrices et le fourreau grâce à leurs moyens intrinsèques de transfert thermique jusqu'à une température de matriçage ;
- rapprocher les matrices l'une de l'autre pour façonner la matière par déformation plastique jusqu'à une position relative prédéterminée correspondant à l'épaisseur souhaitée de la lentille ;
- refroidir les matrices et le fourreau grâce à leurs moyens intrinsèques de transfert thermique jusqu'à une température de démoulage ;
- extraire la lentille finie du moule, selon revendication 13.

De préférence, la température de matriçage est supérieure ou égale à la température de transition vitreuse de la matière thermoplastique utilisée. De bons résultats sont plus précisément obtenus avec une température de matriçage dépassant la température de transition vitreuse d'un écart compris entre 16,6 et 66,6)c (soit entre 30 et 120°F) et de préférence de l'ordre 25°C (45°F).

Inversement, il est préférable que la température de démoulage soit sensiblement inférieure à la température de transition vitreuse. On peut par exemple prévoir une température de démoulage marquant avec la température de transition vitreuse un écart compris entre 11,1 et 27,7°C (soit entre 20 et 50°F) et de préférence de l'ordre de 19,4°C (35°F). Il est en effet intéressant de ne pas trop refroidir le moule, de manière à réduire autant que possible la durée de chaque cycle.

Selon une autre caractéristique avantageuse de l'invention, le fourreau possède une poche annulaire ouverte sur l'intérieur et communiquant avec l'espace interstitiel délimité par les faces de matriçage des deux matrices. Cette poche annulaire est destinée à recevoir la matière plastique excédentaire qui, après matriçage forme une bavure périphérique en débordement latéral des matrices.

L'espace interstitiel délimité par les faces de matriçage des deux matrices forme avec la poche annulaire un volume intérieur hermétique, relié à l'extérieur par au moins un canal de succion traversant le fourreau et débouchant par exemple dans la poche annulaire.

Avec un moule présentant cette caractéristique, on peut avantageusement procéder de la manière suivante : préalablement et/ou simultanément au rapprochement des matrices en vue du façonnage de la matière par déformation plastique, il est créé, à la faveur du canal de succion, un vide relatif dans le volume intérieur hermétique du moule.

De meilleurs résultats seront obtenus avec un vide relatif inférieur à 0,25 bar et de préférence compris entre 0 et 0,1 bar.

Selon une autre caractéristique avantageuse de l'invention, le moule comporte une couronne d'ébavurage montée coulissante dans le fourreau et coopérant éventuellement avec une lèvre bordant la poche annulaire.

Avec un moule présentant cette caractéristique, on peut avantageusement procéder de la manière suivante : après façonnage complet de la matière par rapprochement des matrices, la couronne d'ébavurage est actionnée pour découper la bavure périphérique formée par le surplus de matière débordant latéralement des matrices.

Selon encore une autre caractéristique avantageuse de l'invention, le fourreau comporte deux parties montées pour coulisser l'une par rapport à l'autre suivant le même axe de coulissement que les matrices entre d'une part une configuration d'ouverture offrant un accès direct à l'espace interstitiel délimité par les faces de matriçage des deux matrices en vue, notamment, de l'introduction de la préforme ou paraison entre les matrices et du retrait de la lentille finie à l'issue du matriçage et d'autre part une configuration de fermeture dans laquelle ces deux parties sont en contact par des faces de jonction suivant un plan de joint transversal.

Avantageusement alors, la poche annulaire du fourreau est réalisée sous la forme d'une encoche en renfoncement, et de préférence en dépouille, de la face de jonction de l'une au moins des deux parties du fourreau.

D'autres caractéristiques et avantages de l'invention apparaîtront à la lecture de la description qui suit d'un mode de réalisation particulier donné à titre d'exemple non limitatif.

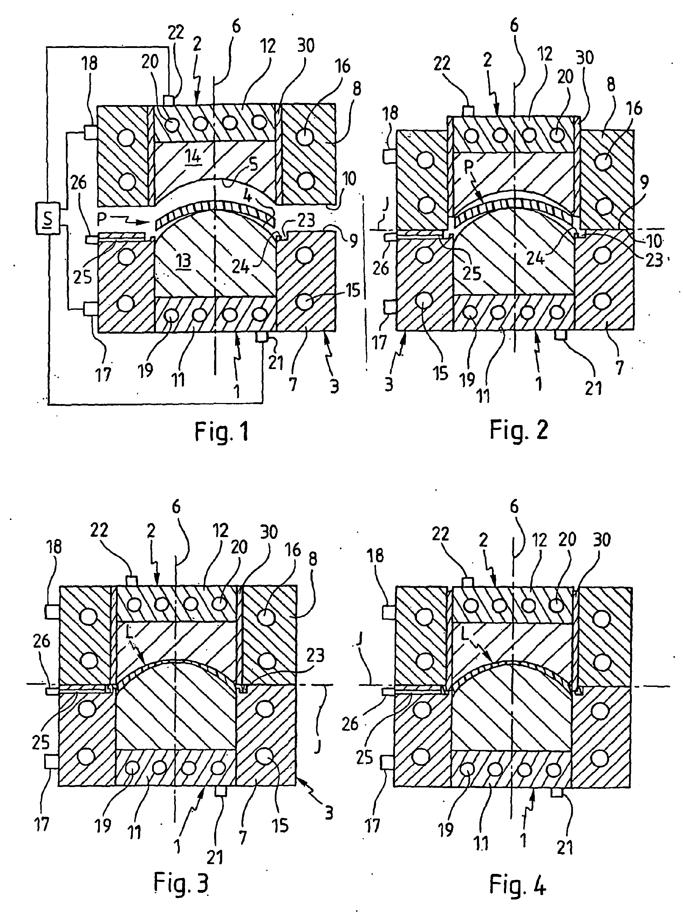

Il sera fait référence aux dessins présentés en annexe, où les figures 1 à 4 sont des vues schématiques en coupe d'un moule conforme à l'invention illustrant les étapes successives du procédé de matriçage selon l'invention.

En référence aux figures, un moule de matriçage à chaud d'une lentille optique en matière thermoplastique, selon l'invention, comporte deux matrices 1, 2 montées coulissantes dans un fourreau 3 et présentant chacune une face de matriçage 4, 5 en regard de l'autre. Le fourreau 3 possède un axe central 6 définissant la direction de coulissement relatif des matrices 1, 2.

Plus précisément, le fourreau 3 comporte deux parties 7, 8 montées sur un support externe (non représenté) associé par exemple au bâti d'une presse, pour coulisser l'une par rapport à l'autre suivant l'axe 6 entre d'une part une configuration d'ouverture, illustrée par la figure 1, offrant un accès direct à l'espace interstitiel délimité par les faces de matriçage 4, 5 des deux matrices et d'autre part une configuration de fermeture, illustrée par les figures 2 à 4 dans laquelle les deux parties 7, 8 sont en contact par des faces de jonction 9, 10 suivant un plan de joint transversal J.

Chacune des deux matrices 1, 2 se compose d'une embase 11, 12 et d'un insert amovible 13, 14 rapporté sur l'embase et portant la face de matriçage 4, 5.

Les deux matrices 1, 2 et le fourreau 3 sont pourvus de moyens intrinsèques de transfert thermique, qui sont ambivalents, c'est-à-dire aptes à assurer à la fois leur chauffage et leur refroidissement. Ces moyens de transfert thermique peuvent par exemple, comme dans l'exemple illustré, être réalisés sous la forme de circuits internes de circulation d'un fluide caloporteur tel qu'une huile. On distingue ainsi en l'espèce des circuits 15, 16 hélicoïdaux ménagés dans les parties 7, 8 du fourreau 3 et d'autre part des circuits 19, 20 spiraux ménagés dans les embases 11, 12 des matrices 1, 2.

L'embase 113, 124 de chaque matrice reçoit donc la totalité des moyens de transfert thermique de ladite matrice : l'insert 13, 14, dépourvu de tels moyens, est exclusivement régulé thermiquement par transfert thermique avec l'embase.

Les deux parties 7, 8 du fourreau 3 et les embases 11, 12 des matrices sont pourvues de raccords 17, 18 et 21, 22 permettant le raccordement des circuits 15, 16 et 19, 20 à une source de régulation thermique externe S commune ou à plusieurs sources distinctes et indépendantes pour une régulation propre des différentes partie du moule indépendamment les unes des autres. On peut notamment prévoir de raccorder d'une part les circuits 15, 16 du fourreau 3 à une première source affectée à la régulation thermique des deux parties 7, 8 du fourreau 3 et d'autre part les circuits 19, 20 des embases des matrices 1, 2 à une seconde source affectée à la régulation thermique des matrices, indépendamment du fourreau 3.

La partie inférieure 7 du fourreau 3 présente une encoche annulaire 23 ménagée en renfoncement de la face de jonction 9 de la partie inférieure 7 du fourreau 3. Cette encoche 23 est adjacente à la face intérieure de la partie 7 du fourreau 3 et est bordée intérieurement par un rebord circulaire 24 formant une lèvre d'ébavurage, comme cela est mieux expliqué plus bas. L'encoche 23 est légèrement en dépouille.

Lorsque le fourreau 3 est en configuration de fermeture avec ses deux parties jointes par leurs faces de jonction 9, 10, l'encoche 23 est recouverte, au moins partiellement, par la face de jonction 10 de la partie supérieure du fourreau 3 pour former une poche annulaire 23. Toutefois, le sommet de la lèvre 24 est légèrement en retrait du plan de joint J, si bien qu'il subsiste un entrebâillement par lequel la poche 23 est ouverte sur l'intérieur du fourreau et communique avec l'espace interstitiel délimité par les faces de matriçage 4, 5 des deux matrices 1, 2, où est placée la préforme ou paraison P.

L'espace interstitiel délimité par les faces de matriçage 4, 5 des deux matrices 1, 2 forme ainsi avec la poche annulaire 23 un volume intérieur, unitaire et hermétique. Un canal de succion 25 est ménagé dans la partie inférieure 7 du fourreau 3 et s'étend transversalement de la poche annulaire 23 à la face extérieur de la partie 7 du fourreau pour relier ledit volume intérieur à l'extérieur. Un raccord 26 est prévu sur la face extérieure de la partie 7 du fourreau pour le raccordement du canal 25 à une pompe à vide (non représentée) en vue de créer un vide relatif dans ledit volume intérieur.

Le moule comporte de plus une couronne d'ébavurage 30 montée coulissante dans la partie supérieure 8 du fourreau 3. Plus précisément, dans l'exemple illustré, la couronne 30 se présente sous la forme d'une portion de tube d'axe 6 interposé entre la matrice supérieure 2 et la partie supérieure 8 du fourreau, avec un jeu transversal très faible permettant un guidage précis suivant l'axe 6 de la matrice supérieure 2, de la couronne 30 et de la partie supérieure 8 du fourreau les unes par rapport aux autres. La fonction d'ébavurage de la couronne 30 est mieux expliquée plus bas.

Pour réaliser le matriçage à chaud d'une lentille optique en matière thermoplastique au moyen du moule qui vient d'être décrit, on procède de la manière suivante.

Une paraison ou préforme P est disposée entre les deux matrices 1, 2. Pour cela on part de la configuration initiale illustrée par la figure 1, dans laquelle d'une part les matrices 1, 2 sont suffisamment écartées l'une de l'autre pour permettre l'introduction entre leurs faces de matriçage 4, 5 de la préforme ou paraison P et d'autre part, les deux parties 7, 8 du fourreau 3 sont écartées l'une de l'autre en configuration d'ouverture, de manière à permettre l'introduction directe de la préforme ou paraison P entre les matrices sans qu'il soit nécessaire de séparer les matrices 1, 2 du fourreau 3.

La paraison ou préforme P est constituée d'une matière thermoplastique telle que du polymétacrylate de méthyle, du polycarbonate ou copolymère de polycarbonate, du polynorbornène, du polystyrène, du polyolefins cyclique ou un de ses copolymères, etc.

Les deux parties 7, 8 du fourreau 3 sont ensuite refermées l'une contre l'autre en étant jointes par leurs faces de jonction 9, 10, comme illustré par la figure 2, pour rendre le fourreau 3 unitaire. Le fourreau 3 enveloppe ainsi dans leur totalité les deux matrices.

Les matrices 1, 2 et le fourreau 3 sont ensuite chauffées ou préchauffées grâce à leurs moyens intrinsèques de transfert thermique jusqu'à une température de matriçage. A cet effet, dans l'exemple illustré, le fluide caloporteur est chauffé par la ou les sources de régulation externes S et mis en circulation dans les circuits 15, 16, 19, 20.

De préférence, la température de matriçage est supérieure ou égale à la température de transition vitreuse de la matière thermoplastique utilisée. De bons résultats sont plus précisément obtenus avec une température de matriçage dépassant la température de transition vitreuse d'un écart compris entre 16,6 et 66,6°C (soit entre 30 et 120 °F) et de préférence de l'ordre de 25°C (45 °F).

On notera qu'au cours de ce chauffage, grâce à la présence des moyens intrinsèques de transfert thermique, la variation de température peut être soumise à un contrôle et régulée selon une loi de variation de température en fonction du temps propice à la réduction des tensions internes.

La température souhaitée étant atteinte, les matrices 1, 2 sont rapprochées l'une de l'autre, comme illustré par la figure 3, pour façonner la matière thermoplastique rendue malléable du fait de la chaleur, par déformation plastique jusqu'à une position relative prédéterminée correspondant à l'épaisseur souhaitée de la lentille.

Préalablement et/ou simultanément au rapprochement des matrices 1, 2 en vue du façonnage de la matière par déformation plastique, il est créé, à la faveur du canal de succion 25 et au moyen de la pompe à vide (non représentée) raccordée au raccord 26, un vide relatif dans le volume intérieur hermétique du moule, défini plus haut.

De meilleurs résultats ont été obtenus avec un vide relatif inférieur à 0,25 bar et de préférence compris entre 0 et 0,1 bar.

Après façonnage complet de la matière par rapprochement des matrices jusqu'au taux de compression prédéterminé (configuration de la figure 3), la couronne d'ébavurage 30 est actionnée pour découper la bavure périphérique formée par le surplus de matière ayant flué lors de la compression et débordant latéralement des matrices 1, 2. A cet effet, la couronne d'ébavurage 30 coopère avec la lèvre 24 bordant la poche annulaire à la façon d'une pince (comme illustré) ou, en alternative, d'une cisaille.

Les matrices 1, 2 et le fourreau 3 sont ensuite refroidis, grâce à leurs moyens intrinsèques de transfert thermique, jusqu'à une température de démoulage. A cet effet, dans l'exemple illustré, le fluide caloporteur est refroidi par la ou les sources de régulation externes S et mis en circulation dans les circuits 15, 16, 19, 20.

Il est préférable que la température de démoulage soit sensiblement inférieure à la température de transition vitreuse. On peut par exemple prévoir une température de démoulage inférieure à la moitié de la température de transition vitreuse. On notera qu'au cours de ce refroidissement, comme lors du chauffage, les moyens intrinsèques de transfert thermique permettent le contrôle de la variation de température et sa régulation selon une loi de variation de température en fonction du temps propice à la réduction des tensions internes.

Il suffit enfin d'extraire la lentille finie L du moule. A cet effet, les deux parties 7, 8 du fourreau 3 sont écartées l'une de l'autre, de même que les deux matrices 1, 2. Un accès direct est ainsi offert à l'espace situé entre les matrices 1, 2 et à la lentille finie L qui repose sur la matrice inférieure 1 . Il suffit alors de saisir la lentille L au moyen d'un outil de préhension tel que qu'une pince manuelle ou associée à un bras manipulateur automatisé.

Il y a également lieu d'extraire de la poche annulaire la bavure périphérique découpée par la couronne d'ébavurage 30.

Le moule qui vient d'être d'écrit peut être utilisé
- soit individuellement pour la production de lentilles en faible quantité ou même à l'unité (ou à la paire), c'est-à-dire à la demande pour répondre à une commande de prescription,
- soit au sein d'une unité de production de masse comportant plusieurs moules de ce type pour le formage d'un nombre correspondant de lentilles à chaque cycle simultanément.

Par ailleurs, partant de ses caractéristiques et étapes principales du moule et du procédé selon l'invention, plusieurs variantes et adjonctions peuvent être envisagées. Ces variantes et adjonctions, mentionnées ci-dessous, peuvent être mises en oeuvre séparément ou en combinaison les unes avec les autres dans le but d'obtenir directement une lentille finie ou semi-finie revêtue, ou tout au moins traitée.

Conformément à une première caractéristique additionnelle, la préforme ou paraison P peut avantageusement être pré-revêtue d'un revêtement mono ou multi couche(s), avant d'être placé entre les deux matrices.

Conformément à une seconde caractéristique additionnelle, avant de chauffer les matrices et le fourreau, un film thermoplastique est disposé entre la paraison ou préforme et au moins l'une des deux matrices. Ce film thermoplastique est ensuite appliqué et auto-soudé à la face correspondante de la lentille par ce qui est couramment appelé laminage ou stratification à chaud, pendant l'étape de matriçage, de manière similaire au procédé décrit dans le document WO99/24243 qui est incorporé par référence à la présente description. Avantageusement, le film peut être revêtu d'un revêtement mono ou multi couche(s). En alternative ou en combinaison avec un revêtement associé au film, le film peut aussi être de type photochromique et/ou polarisé de manière à conférer à la lentille les propriétés correspondantes. Le film peut aussi être tinté et/ou coloré.

Conformément à une troisième caractéristique additionnelle, un revêtement mono ou multi couche(s) peut être disposé sur au moins un des deux moules avant que ces derniers ne soient chauffés. Ce revêtement est ensuite transféré à chaud à la face correspondante de la lentille pendant l'étape de matriçage, de manière similaire au procédé décrit dans le document US-5458820 qui est incorporé par référence à la présente description.

De manière générale, l'invention n'est pas limitée au mode de réalisation particulier qui vient d'être décrit, mais englobe au contraire toute variante reprenant, avec des moyens équivalents, ses caractéristiques essentielles. En particulier, bien qu'il ait été décrit et illustré un moule dont les moyens intrinsèques de transfert thermique sont intégralement réalisés sous la forme d'un circuit interne de circulation d'un fluide caloporteur, il serait également possible, sans sortir du cadre de l'invention, de réaliser ces moyens de transfert thermique sous toute autre forme connue, notamment en ce qui concerne la fonction chauffage au moyen de résistances électrique, par induction de courant haute fréquence dans des bobines, ou encore par chauffage infrarouge ou ultra violet.

## Revendications

1. Moule de matriçage à chaud d'une lentille optique en matière thermoplastique, comportant deux matrices (1, 2) montées dans un fourreau (3) pour coulisser suivant l'axe (6) de ce fourreau et présentant chacune une face de matriçage transversale (4, 5) en regard de l'autre, **caractérisé en ce que** les deux matrices (1, 2) et le fourreau (3) sont pourvus de moyens intrinsèques et ambivalents de transfert thermique (15, 16, 19, 20).

2. Moule selon la revendication 1, dans lequel chaque matrice (1, 2) se compose :
- d'une embase (11, 12) comportant au moins une partie des moyens de transfert thermique de ladite matrice et des moyens (17, 18, 21, 22) de leur raccordement à une source de transfert thermique (S),
- d'un insert amovible (13, 14) rapporté sur l'embase (11, 12) et portant la face de matriçage.

3. Moule selon la revendication 2, dans lequel l'embase (11, 12) de chaque matrice reçoit la totalité des moyens de transfert thermique (19, 20) de ladite matrice, l'insert (13, 14), dépourvu de tels moyens, étant exclusivement régulé thermiquement par transfert thermique avec l'embase (11, 12).

4. Moule selon l'une des revendications précédentes, dans lequel le fourreau (3) possède une poche annulaire (23) ouverte sur l'intérieur et communiquant avec l'espace interstitiel délimité par les faces de matriçage (4, 5) des deux matrices (1, 2).

5. Moule selon la revendication 4, dans lequel l'espace interstitiel délimité par les faces de matriçage (4, 5) des deux matrices (1, 2) forme avec la poche annulaire (23) un volume intérieur hermétique, relié à l'extérieur par au moins un canal de succion (25) traversant le fourreau (3).

6. Moule selon la revendication 5, dans lequel le canal de succion (25) débouche dans la poche annulaire (23).

7. Moule selon l'une des revendications 4 à 6, comportant une couronne d'ébavurage (30) montée coulissante dans le fourreau (3).

8. Moule selon la revendication 7, dans lequel la couronne d'ébavurage (30) coopère avec une lèvre (24) bordant la poche annulaire (23).

9. Moule selon l'une des revendications 4 à 8, dans lequel le fourreau comporte deux parties (7, 8) montées pour coulisser l'une par rapport à l'autre suivant le même axe (6) de coulissement que les matrices entre d'une part une configuration d'ouverture offrant un accès direct à l'espace interstitiel délimité par les faces de matriçage (4, 5) des deux matrices et d'autre part une configuration de fermeture dans laquelle ces deux parties sont en contact par des faces de jonction (9, 10) suivant un plan de joint transversal (J).

10. Moule selon la revendication 9, dans lequel la poche annulaire (23) du fourreau (3) est réalisée sous la forme d'une encoche ménagée en renfoncement de la face de jonction (9) de l'une (7) au moins des deux parties du fourreau (3).

11. Moule selon la revendication 10, dans lequel l'encoche (23) est en dépouille.

12. Moule selon l'une des revendications précédentes, dans lequel les moyens de transfert thermique comportent un circuit interne (15, 16, 19, 20) de circulation d'un fluide caloporteur.

13. Procédé de matriçage à chaud d'une lentille optique en matière thermoplastique au moyen d'un moule selon l'une des revendications précédentes, comportant les étapes de :
- disposer une paraison ou préforme (P) de ladite matière thermoplastique entre les deux matrices (1, 2) et enfermer l'ensemble dans le fourreau (3) ;
- chauffer les matrices (1, 2) et le fourreau (3) grâce à leurs moyens intrinsèques de transfert thermique (15, 16, 19, 20) jusqu'à une température de matriçage ;
- rapprocher les matrices (1, 2) l'une de l'autre pour façonner la matière par déformation plastique jusqu'à une position relative prédéterminée correspondant à l'épaisseur souhaitée de la lentille ;
- refroidir les matrices (1, 2) et le fourreau (3) grâce à leurs moyens intrinsèques de transfert thermique (15, 16, 19, 20) jusqu'à une température de démoulage ;
- extraire la lentille finie (L) du moule.

14. Procédé de matriçage selon la revendication 13, dans lequel la température de matriçage est supérieure ou égale à la température de transition vitreuse de la matière thermoplastique utilisée.

15. Procédé de matriçage selon la revendication 14, dans lequel la température de matriçage est supérieure à la température de transition vitreuse de la matière thermoplastique utilisée, avec un écart compris entre 16,6 et 66,6°C et de préférence de l'ordre de 25°C.

16. Procédé de matriçage selon l'une des revendications 13 à 15, dans lequel la température de démoulage est sensiblement inférieure à la température de transition vitreuse.

17. Procédé de matriçage selon la revendication 16, dans lequel la température de démoulage marque avec la température de transition vitreuse un écart compris entre 11,1 et 27,7°C et de préférence de l'ordre de 19,4°C

18. Procédé de matriçage selon l'une des revendications 13 à 17, au moyen d'un moule selon la revendication 5, dans lequel, préalablement et/ou simultanément au rapprochement des matrices (1, 2) en vue du façonnage de la matière par déformation plastique, il est créé, à la faveur du canal de succion (25), un vide relatif dans le volume intérieur hermétique du moule.

19. Procédé de matriçage selon la revendication 18, dans lequel le vide relatif est inférieur à 0,25 bar.

20. Procédé de matriçage selon la revendication 19, dans lequel le vide relatif est compris entre 0 et 0,1 bar.

21. Procédé de matriçage selon l'une des revendications 13 à 20, au moyen d'un moule selon la revendication 7, dans lequel, après façonnage complet de la matière par rapprochement des matrices (1, 2), la couronne d'ébavurage (30) est actionnée pour découper la bavure périphérique formée par le surplus de matière débordant latéralement des matrices (1, 2).

22. Procédé de matriçage selon la revendication 13, dans lequel la préforme ou paraison peut avantageusement être pré-revêtue d'un revêtement mono ou multi couche(s), avant d'être placée entre les deux matrices (1, 2).

23. Procédé de matriçage selon la revendication 13, dans lequel, avant de chauffer les matrices (1, 2) et le fourreau (3), un film thermoplastique est disposé entre la paraison ou préforme (P) et au moins l'une des deux matrices (1, 2), ce film thermoplastique étant ensuite appliqué et auto-soudé à la face correspondante de la lentille, pendant l'étape de matriçage.

24. Procédé de matriçage selon la revendication 23, dans lequel le film est revêtu d'un revêtement mono ou multi couche(s).

25. Procédé de matriçage selon la revendication 23, dans lequel le film est de type photochromique.

26. Procédé de matriçage selon la revendication 23, dans lequel le film est de type polarisé.

27. Procédé de matriçage selon la revendication 23, dans lequel le film est tinté et/ou coloré.

28. Procédé de matriçage selon la revendication 13, dans lequel un revêtement mono ou multi couche(s) est disposé sur au moins un des deux moules avant que ces derniers ne soient chauffés, ce revêtement étant ensuite transféré à chaud à la face correspondante de la lentille pendant l'étape de matriçage.

## Claims

1. A mold for hot-forming a thermoplastic lens, the mold comprising two dies (1, 2) mounted in a sheath (3) to slide along the axis (6) of the sheath, and each presenting a transverse forming face (4, 5) facing the other, **characterized in that** the two dies (4, 5) and the sheath (3) are provided with intrinsic and both-way heat transfer means (15, 16, 19, 20).

2. A mold according to claim 1, in which each die (1, 2) comprises:
- a base (11, 12) comprising at least a fraction of the heat transfer means of said die, and means (17, 18, 21, 22) for connecting them to a heat transfer source(S),
- a removable insert (13, 14) fitted to the base (11, 12) and carrying the forming face.

3. A mold according to claim 2, in which the base (11, 12) of each die receives all of the heat transfer means (19, 20) of said die, the insert (13, 14) having no such means, being temperature regulated solely by heat transfer with the base (11, 21).

4. A mold according to one of the preceding claims, in which the sheath (3) possesses an annular recess (23) open to the inside and communicating with the interstitial gap defined by the forming faces (4, 5) of the two dies (1, 2).

5. A mold according to claim 4, in which the interstitial gap defined by the forming faces (4, 5) of the two dies (1, 2) forms with the annular recess (23) a sealed inside volume which is connected to the outside via at least one suction channel (25) passing through the sheath (3).

6. A mold according to claim 5, in which the suction channel (25) opens out into the annular recess (23).

7. A mold according to one of claims 4 to 6, including a trimming ring (30) slidably mounted in the sheath (3).

8. A mold according to claim 7, in which the trimming ring (30) co-operates with a lip (24) bordering the annular recess (23).

9. A mold according to one of claims 4 to 8, in which the sheath has two portions (7, 8) mounted to slide relative to each other along the same sliding axis (6) as the dies between firstly an open configuration giving direct access to the interstitial gap defined by the forming faces (4, 5) of the two dies and secondly a closed configuration in which the two portions are in contact via junction faces (9, 10) in a transverse join plane (J).

10. A mold according to claim 9, in which the annular recess (23) of the sheath (3) is implemented in the form of a groove formed as a setback in the junction face (9) of at least one (7) of the two portions of the sheath (3).

11. A mold according to claim 10, in which the groove (23) possesses draft taper.

12. A mold according to any one of the preceding claims, in which the heat transfer means comprise an internal circuit (15, 16, 19, 20) for circulating a heat-conveying fluid.

13. A method of hot-forming a thermoplastic lens by means of a mold according to one of the preceding claims, comprising the steps of:
- placing a parison or preform (P) of said thermoplastic material between the two dies and enclosing the assembly in the sheath (3);
- heating the dies (1, 2) and the sheath (3) by their intrinsic heat transfer means (15, 16, 19, 20) up to a forming temperature;
- moving the dies (1, 2) towards each other to shape the material by plastic deformation until a predetermined relative position is reached corresponding to the thickness desired for the lens;
- cooling the dies (1, 2) and the sheath (3) by their intrinsic heat transfer means (15, 16, 19, 20) down to an unmolding temperature;
- extracting the finished lens (L) from the mold.

14. A forming method according to claim 13, in which the forming temperature is greater than or equal to the vitreous transition temperature of the thermoplastic material used.

15. A forming method according to claim 14, in which the forming temperature exceeds the vitreous transition temperature of the thermoplastic material used by an amount lying in the range 16.6°C to 66.6°C and preferably by of the order of 25 °C.

16. A forming method according to one of claims 13 to 15, in which the unmolding temperature is significantly below the vitreous transition temperature.

17. A forming method according to claim 16, in which the unmolding temperature presents with respect to the vitreous transition temperature a difference lying in the range 11.1°C to 27.7°C and preferably of the order of 19.4°C.

18. A forming method according to one of claims 13 to 17, using a mold according to claim 5, in which, before and/or simultaneously with the dies (1, 2) being moved towards each other in order to shape the material by plastic deformation, a relative vacuum is created in the sealed inside volume of the mold by means of the suction channel (25).

19. A forming method according to claim 18, in which the relative vacuum is lower than 0.25 bar.

20. A forming method according to claim 19, in which the relative vacuum lies in the range 0 to 0.1 bar.

21. A forming method according to one of claims 13 to 20, using a mold according to claim 7, in which, after the material has been fully shaped by moving the dies (1, 2) towards each other, the trimming ring (30) is actuated to cut off the peripheral flash formed by the surplus material projecting sideways from the dies (1, 2).

22. A forming method according to claim 13, in which the parison or preform may advantageously be pre-coated with a single or multi layer coating, before being placed between the two dies (1, 2).

23. A forming method according to claim 13, in which, before heating the dies (1, 2) and the sheath (3), a thermoplastic film is disposed between the parison or preform (P) and at least one of the two dies (1, 2), said thermoplastic film then being applied and self-welded to the corresponding face of the lens during the shaping step.

24. A forming method according to claim 23, in which the film is coated with a single or multi layer coating.

25. A forming method according to claim 23, in which the film is of photochromic type.

26. A forming method according to claim 23, in which the film is of polarized type.

27. A forming method according to claim 23, in which the film is tinted and/or colored.

28. A forming method according to claim 13, in which a single or multi layer coating is disposed on at least one of the two molds before heating them, this coating being then hot-transferred on the corresponding face of the lens during the shaping step.

## Patentansprüche

1. Form zur Warmverformung einer optischen Linse aus thermoplastischem Material, umfassend zwei Matrizen (1, 2), die in einer Hülse (3) angeordnet sind, um sich entlang einer Achse (6) dieser Hülse zu bewegen, und wobei jede eine transversale Formseite (4, 5) einander gegenüberliegend aufweist, **dadurch gekennzeichnet, dass** die zwei Matrizen (1, 2) und die Hülse (3) intrinsische und ambivalente Wärmeübertragungsmittel (15, 16, 19, 20) aufweisen.

2. Form nach Anspruch 1, wobei jede Matrize (1, 2) besteht aus:
- einer Basis (11, 12), welche zumindest einen Abschnitt mit den Wärmeübertragungsmittel der Matrizen umfasst, und Mittel (17, 18, 21, 22) für ihre Verbindung mit einer Wärmeübertragungsquelle (S),
- einem herausnehmbaren Einsatz (13, 14), welcher mit der Basis (11, 12) verbunden ist und die Formseite trägt.

3. Form nach Anspruch 2, wobei die Basis (11, 12) jeder Matrize die Gesamtheit der Wärmeübertragungsmittel (19, 20) der Matrize aufnimmt, wobei der Einsatz (13, 14), welcher keine solchen Mittel aufweist, ausschließlich durch Wärmeübertragung mit der Basis (11, 12) thermisch reguliert wird.

4. Form nach einem der vorangehenden Ansprüche, wobei die Hülse (3) eine ringförmige Tasche (23) aufweist, welche nach innen offen ist, und welche mit dem durch die Formseiten (4, 5) der zwei Matrizen (1, 2) begrenzten Zwischenraum kommuniziert.

5. Form nach Anspruch 4, wobei der durch die Formseiten (4, 5) der zwei Matrizen (1, 2) begrenzte Zwischenraum mit der ringförmigen Tasche (23) ein hermetisches inneres Volumen ausbildet, welches mit Außen über zumindest einen die Hülse (3) durchquerenden Ansaugkanal (25) verbunden ist.

6. Form nach Anspruch 5, wobei der Ansaugkanal (25) in die ringförmige Tasche (23) mündet.

7. Form nach einem der Ansprüche 4 bis 6, umfassend einen Entgratungskranz (30), welcher versetzbar in der Hülse (3) angeordnet ist.

8. Form nach Anspruch 7, wobei der Entgratungskranz (30) mit einer Lippe (24) zusammenwirkt, welche die ringförmige Tasche (23) säumt.

9. Form nach einem der Ansprüche 4 bis 8, wobei die Hülse zwei Abschnitte (7, 8) umfasst, so angeordnet, dass zueinander entlang der selben Versetzungs-Achse (6) wie die Matrizen versetzbar sind, zwischen einerseits einer offenen Konfiguration, welche einen direkten Zugang zu dem durch die Formseiten (4, 5) der beiden Matrizen begrenzten Zwischenraum aufweist, und andererseits einer geschlossenen Konfiguration, in welcher die beiden Abschnitte über Verbindungsflächen (9, 10) entlang einer transversalen Verbindungsebene (J) in Kontakt sind.

10. Form nach Anspruch 9, wobei die ringförmige Tasche (23) der Hülse (3) in der Form einer Kerbe ausgeführt ist, ausgebildet als Verstärkung der Verbindungsseite (9) des zumindest einen (7) der zwei Abschnitte der Hülse (3).

11. Form nach Anspruch 10, wobei die Kerbe (23) schräg ist.

12. Form nach einem der vorangehenden Ansprüche, wobei die Wärmeübertragungsmittel einen internen Kreislauf (15, 16, 19, 20) für die Zirkulation eines Wärmeübertragungsfluids umfassen.

13. Verfahren zur Warmverformung einer optischen Linse aus thermoplastischem Material mittels einer Form nach einem der vorangehenden Ansprüche, umfassend die Schritte:
- Anordnen eines Rohlings oder einer Vorform (P) aus dem thermoplastischen Material zwischen den zwei Matrizen (1, 2) und Einschließen des Ensembles in der Hülse (3);
- Erwärmen der Matrizen (1, 2) und der Hülse (3) mittels ihrer intrinsischen Wärmeübertragungsmittel (15, 16, 19, 20) bis zu einer Verformungstemperatur;
- Annähern der Matrizen (1, 2) zueinander um das Material durch plastische Verformung zu formen, bis zu einer relativen vorbestimmten Position, welche der gewünschten Dicke der Linse entspricht;
- Abkühlen der Matrizen (1, 2) und der Hülse (3) mittels ihrer intrinsischen Wärmeübertragungsmittel (15, 16, 19, 20) bis zu einer Ausformungstemperatur;
- Entfernen der fertigen Linse (L) aus der Form.

14. Verfahren zur Verformung nach Anspruch 13, wobei die Verformungstemperatur höher als oder gleich der Glasübergangstemperatur des verwendeten thermoplastischen Materials ist.

15. Verfahren zur Verformung nach Anspruch 14, wobei die Verformungstemperatur höher als die Glasübergangstemperatur des verwendeten thermoplastischen Materials in einem Bereich von 16,6 und 66, 6°C und vorzugsweise in der Größenordnung von 25°C ist.

16. Verfahren zur Verformung nach einem der Ansprüche 13 bis 15, wobei die Ausformungstemperatur im Wesentlichen geringer als die Glasübergangstemperatur ist.

17. Verfahren zur Verformung nach Anspruch 16, wobei die Ausformungstemperatur mit der Glasübergangstemperatur einen Bereich von 11,1 bis 27,7 °C und vorzugsweise in der Größenordnung von 19,4 °C markiert.

18. Verfahren zur Verformung nach einem der Ansprüche 13 bis 17 mittels einer Form nach Anspruch 5, wobei vor und/oder gleichzeitig zu dem Annähern der Matrizen (1, 2) beim Formen des Materials durch plastische Deformation mit Hilfe des Ansaugkanals (25) ein relatives Vakuum in dem hermetischen inneren Volumen der Form erzeugt wird.

19. Verfahren zur Verformung nach Anspruch 18, wobei das relative Vakuum unter 0,25 bar ist.

20. Verfahren zur Verformung nach Anspruch 19, wobei das relative Vakuum im Bereich von 0 und 0,1 bar ist.

21. Verfahren zur Verformung nach einem der Ansprüche 13 bis 20 mittels einer Form nach Anspruch 7, wobei nach dem vollständigen Formen des Materials durch Annähern der Matrizen (1, 2) der Entgratungskranz (30) zum Abschneiden der peripheren Gussnaht, welche durch den Materialüberstand gebildet ist, der seitlich an den Matrizen (1, 2) übersteht, betätigt wird.

22. Verfahren zur Verformung nach Anspruch 13, wobei die Vorform oder der Rohling vorteilhaft mit einer ein- oder mehrlagigen Beschichtung vorbeschichtet ist, bevor sie/er zwischen die zwei Matrizen (1, 2) platziert wird.

23. Verfahren zur Verformung nach Anspruch 13, wobei vor dem Erwärmen der Matrizen (1, 2) und der Hülse (3) ein thermoplastischer Film zwischen dem Rohling oder der Vorform (P) und zumindest einer der beiden Matrizen (1, 2) angeordnet ist/wird, wobei der thermoplastische Film daraufhin während des Verfomungsschrittes an der entsprechenden Seite der Linse aufgebracht und autoverschweißt wird.

24. Verfahren zur Verformung nach Anspruch 23, wobei der Film mit einer ein- oder mehrlagigen Beschichtung beschichtet ist.

25. Verfahren zur Verformung nach Anspruch 23, wobei der Film von fotochromer Art ist.

26. Verfahren zur Verformung nach Anspruch 23, wobei der Film von polarisierter Art ist.

27. Verfahren zur Verformung nach Anspruch 23, wobei der Film getönt und/oder farbig ist.

28. Verfahren zur Verformung nach Anspruch 13, wobei eine ein- oder mehrlagige Beschichtung an zumindest einer der beiden Formen angeordnet ist, bevor die letzteren erwärmt werden, wobei die Beschichtung daraufhin auf die entsprechende Seite der Linse während des Verformungsschrittes wärmetransferiert wird.
